# NEUE EUROPÄISCHE PATENTSCHRIFT

(11) **EP 3 359 902 B2**
(45) Veröffentlichungstag und Bekanntmachung des Hinweises auf die Entscheidung über den Einspruch: **28.06.2023**
(45) Hinweis auf die Patenterteilung: 04.09.2019
(21) Anmeldenummer: 16777909.9
(22) Anmeldetag: 06.10.2016
(51) Int. Cl.: F28F 3/02, F28D 9/00

(54) **VERFAHREN ZUR HERSTELLUNG EINER LAMELLE UND PLATTENWÄRMETAUSCHER MIT EINER LAMELLE HERGESTELLT NACH DEM VERFAHREN**
METHOD FOR MANUFACTURING A LAMELLA AND A PLATE HEAT EXCHANGER WITH A LAMELLA MANUFACTURED BY SUCH A METHOD
PROCÉDÉ DE FABRICATION D'UNE LAMELLE ET UN ÉCHANGEUR DE CHALEUR À PLAQUE AVEC UNE LAMELLE FABRIQUÉE À L'AIDE D'UN TEL PROCÉDÉ

(30) Priorität: 08.10.2015 EP 15002883
(43) Veröffentlichungstag der Anmeldung: 15.08.2018
(60) Teilanmeldung: 19020116.0
(73) Patentinhaber: Linde GmbH, 82049 Pullach (DE)
(72) Erfinder: RONACHER, Manfred, Georg, 80805 München (DE)
(74) Vertreter: Meilinger, Claudia Sabine
(86) Internationale Anmeldenummer: PCT/EP2016/001661
(87) Internationale Veröffentlichungsnummer: WO 2017/059959

(56) Entgegenhaltungen:
- EP-A1- 1 630 896
- EP-A1- 2 869 013
- EP-A2- 2 369 284
- WO-A1-2012/044288
- DE-A1- 10 343 107
- JP-A- 2007 248 014
- JP-A- 2007 248 014
- US-A- 5 816 320
- US-A1- 2005 121 181
- US-A1- 2007 199 686
- US-A1- 2010 258 286
- US-A1- 2011 168 374
- US-B1- 6 951 245
- US-B2- 7 219 719

## Beschreibung

Die vorliegende Erfindung betrifft ein Verfahren zur Herstellung einer Lamelle, im Englischen als Fin bezeichnet, für einen Plattenwärmetauscher und ein Verfahren zur Herstellung eines Plattenwärmetauschers.

Gelötete Plattenwärmetauscher aus Aluminium werden in zahlreichen Anlagen bei verschiedensten Drücken und Temperaturen eingesetzt. Sie finden beispielsweise Anwendung bei der Zerlegung von Luft, der Verflüssigung von Erdgas oder in Anlagen zur Herstellung von Ethylen.

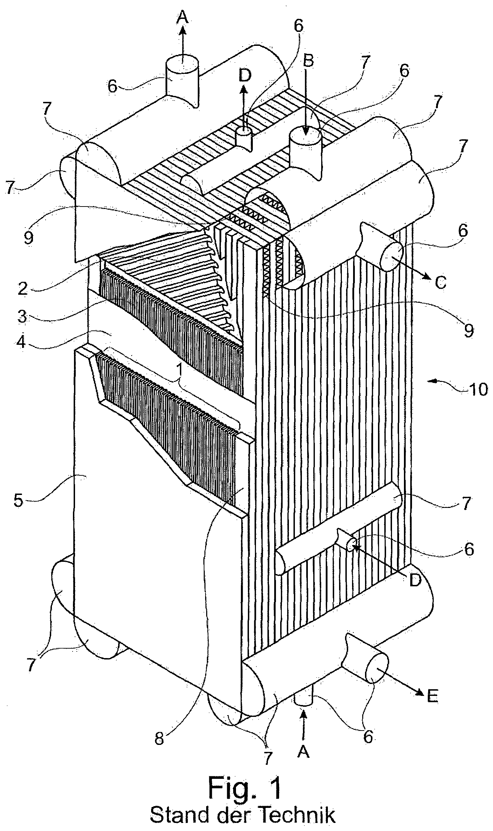

Ein gelöteter Plattenwärmetauscher wird beispielsweise in "The standards of the brazed aluminium plate-fin heat exchanger manufactures association" ALPEMA, Third Edition, 2010 auf Seite 5 gezeigt und beschrieben. Eine daraus entnommene Abbildung ist in der Fig. 1 dargestellt und wird im Folgenden beschrieben.

Der dort gezeigte Plattenwärmetauscher umfasst mehrere in einem Stapel mit Abstand zueinander angeordnete Trennbleche 4, die eine Vielzahl von Passagen 1 für die miteinander in Wärmeaustausch zu bringenden Medien bilden. Die Passagen 1 sind durch bündig am Rand der Trennbleche 4 angebrachte Randleisten 8, im Englischen auch als Sidebars 8 bezeichnet, nach außen abgeschlossen. Innerhalb der Passagen 1 sind Lamellen 3 mit wellenförmiger Struktur, im Englischen auch als Fins bezeichnet, angeordnet. Die Trennbleche 4, Lamellen 3 und Randleisten 8 sind durch Löten miteinander verbunden und bilden somit einen kompakten Wärmetauscherblock 10. Der gesamte Wärmetauscherblock 10 ist durch Deckbleche 5 nach außen begrenzt.

Zur Zu- und Abführung der wärmeaustauschenden Medien sind über Eintritts- und Austrittsöffnungen 9 der Passagen 1 halbzylinderförmige Sammler 7 mit Stutzen 6 angebracht, die zum Anschluss von zu- und abführenden Rohrleitungen dienen. Die Sammler 7 werden im Folgenden auch als Header 7 bezeichnet. Die Ein- und Austrittsöffnungen 9 der Passagen 1 sind durch sogenannte Verteilerlamellen bzw. Verteilerfins 2 gebildet, die für eine gleichmäßige Verteilung der Medien über die gesamte Breite der einzelnen Passagen 1 sorgen. Die Medien strömen in den durch die Lamellen 3 und die Trennbleche 4 gebildeten Kanälen durch die Passagen 1.

Derartige Plattenwärmetauscher sind vorzugsweise aus Aluminium gebildet. Die zum Teil mit Lot versehenen Lamellen 3, Trennbleche 4, Verteilerlamellen 2, Deckbleche 5 und Randleisten 8 werden in Form eines quaderförmigen Blockes aufeinander gestapelt und anschließend in einem Ofen zu einem Wärmetauscherblock 10 gelötet. Im Allgemeinen wird das Lot vor dem Verlöten beidseitig auf die Trennbleche und ggf. auf die Lamellen aufgebracht. Nach dem Verlöten in einem Lötofen werden auf den Wärmetauscherblock 10 die Sammler 7 mit Stutzen 6 aufgeschweißt.

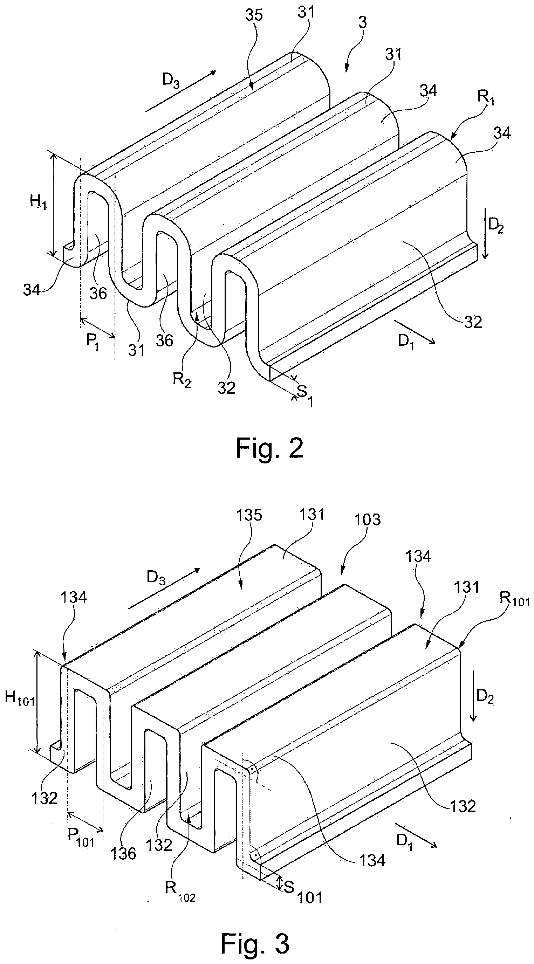

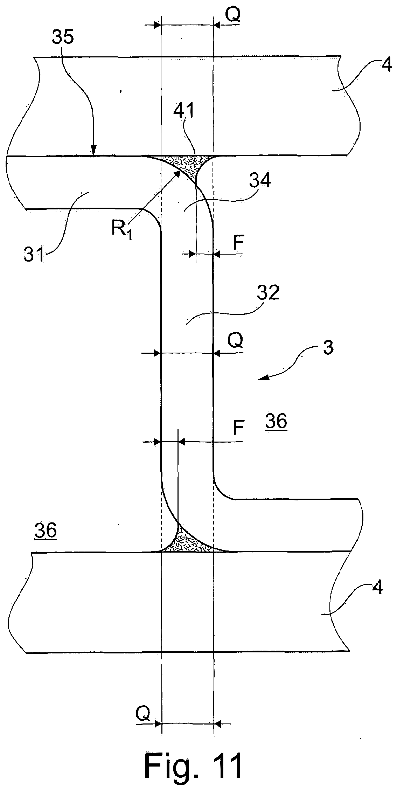

Die Lamellen werden im Allgemeinen aus dünnen, ebenen Blechen hergestellt, welche mit einer Presse oder anderen zum Biegeumformen geeigneten Werkzeugen zu wellenförmigen Strukturen gefaltet werden. Dies ist beispielsweise in DE 103 43 107 A1 in Absatz [0005] offenbart, die damit den Oberbegriff für das erfindungsgemäße Verfahren bildet. Fig. 2 zeigt ein Beispiel für eine durch Biegeumformen gebildete Lamelle 3. Diese weist eine Mehrzahl an Wellendächern 31 und Wellenstegen 32 auf, die in einer ersten Raumrichtung (D1) jeweils aufeinander folgen. Die Wellendächer 31 der wellenförmigen Struktur sind, wie in Fig. 11 dargestellt, nach dem Löten des Wärmeaustauscherblocks 10 in einem Lötofen mit den jeweils benachbarten Trennblechen 4 durch eine Lötverbindung flächig verbunden.

Die Lamellen 3 innerhalb der Passagen 1 erfüllen drei Aufgaben:
Zum einen wird durch die Lamellen die Wärmeaustauschfläche vergrößert. Zur Optimierung der Wärmeübertragung wird die Ausrichtung der wellenförmigen Struktur in benachbarten Passagen in Abhängigkeit vom Anwendungsfall so gewählt, dass Gleich- Kreuz-, Gegen- oder Kreuz-Gegenströmung zwischen den benachbarten Passagen ermöglicht wird.

Zum anderen stellen die Lamellen mit ihren Wellendächern über die Lötverbindungen eine stoffschlüssige Verbindung unter den Trennblechen her. Die Wellenstege der Lamellen nehmen die Kräfte auf, die durch den Innendruck auf die Trennbleche wirken.

Zudem dienen die Lamellen dazu, die Passagen in kleine Kanäle zu unterteilen, wodurch eine gleichmäßige Verteilung eines Mediums über die gesamte Breite einer Passage erreicht wird und somit der Wärmetausch zwischen den in benachbarten Passagen fließenden Medien verbessert wird.

Durch die bei dem Umformprozess der Lamelle 3 einzuhaltenden Randbedingungen, wie Innenradien R2 und Außenradien R1 der Blechkanten 34 (Fig. 2) am Übergang zwischen jeweiligem Wellendach 31 und Wellensteg 32 und die beim Umformprozess auftretenden Toleranzen weist die Lamelle 3 häufig Abweichungen von einer gewünschten Idealform hinsichtlich einer idealen Krafteinleitung auf. Es hat sich gezeigt, dass hierdurch die mechanische Festigkeit eines Plattenwärmetauschers begrenzt wird. Die Größe der Außenradien R1 ist bestimmt durch die Größe der Innenradien R2 und die Wandstärke S der Lamelle.

Um die mechanische Festigkeit eines Plattenwärmeaustauschers mit Lamellen zu verbessern, schlägt die DE 103 43 107 A1 vor, die Lamellen aus einer dicken Platte zu fertigen, die entweder warm extrudiert ist oder mit einem spanabhebenden Verfahren hergestellt ist, um eine Rechteckform von Wellendächern und Wellenstegen zu erreichen. Dabei werden weitere Parameter zum Verhältnis zwischen Dicke der wellenförmigen Struktur selbst und ihrer Teilung, d.h. Wellenlänge und Wellenamplitude, vorgeschlagen. Nachteil einer spanabhebenden Formgebung ist, dass beim Löten des Wärmetauscherblocks im Lötofen die durch die vorherige spanende Bearbeitung geschaffene, aufgebrochene Gefügestruktur der Lamelle vermehrt Lot aufnimmt, wodurch die Festigkeit des Lamellenmaterials nachteilig reduziert wird. Eine durch Warmextrudieren hergestellt Lamelle kann nur eine eng begrenzte Breite - in der in der DE 103 43 107 A1 dargestellten Richtung D2 - mit wenigen Wellendächern von etwa vier bis fünf aufweisen. Zudem können keine perforierten oder geschnittenen Geometrien gefertigt werden.

In der DE 10 2009 018 247 A1 wird zur Erhöhung der Festigkeit eines Plattenwärmetauschers vorgeschlagen, eine Passage mit einer Vielzahl von nebeneinander angeordneten Profilen zu versehen. Durch die Verwendung von Profilen soll die Kontaktfläche zwischen Trennblech und Lamelle vergrößert werden. Zudem weisen Profile geringe Fertigungstoleranzen bezüglich der angestrebten Winkelgrade auf, sodass sich eine günstige Krafteinleitung ergibt. Der Fertigungsaufwand eines Plattenwärmetauschers mit Profilen als Wärmeleitstruktur in den Passagen ist jedoch erhöht, da die Profile vor dem Verlöten einzeln nebeneinander auf die Trennbleche aufgelegt werden müssen.

Aufgabe der vorliegenden Erfindung ist, ein Verfahren zur Herstellung einer Lamelle für einen Plattenwärmetauscher zur Verfügung zu stellen, mit welchem eine Lamelle erhalten wird, die eine hohe Festigkeit eines mit der Lamelle hergestellten gelöteten Plattenwärmeaustauschers gewährleistet und damit für Hochdruckanwendungen einsetzbar ist. Aufgabe ist auch die Bereitstellung eines Verfahrens zur Herstellung eines Plattenwärmetauschers.

Diese Aufgabe wird gelöst mit einem Verfahren zur Herstellung einer Lamelle mit den Merkmalen nach Anspruch 1, und einem Verfahren zur Herstellung eines Plattenwärmetauschers nach Anspruch 8.

Die vorliegende Patentanmeldung stellt ein Verfahren zur Herstellung einer Lamelle für einen Plattenwärmetauscher bereit, welches folgende Schritte aufweist:
a) Bereitstellen einer wellenförmigen Struktur aus einem umgeformten, vorzugsweise biegeumgeformten Blech, mit zumindest einem Wellendach mit Wellenstegen, wobei das Wellendach und die Wellenstege jeweils über eine Blechkante verbunden sind, und wobei die Blechkante einen Innen- und einen Außenradius aufweist, und erfindungsgemäß dem Schritt (a) nachfolgend, insbesondere an Schritt (a) anschließend:
b) Druckumformen, vorzugsweise kaltes Fließpressen, des zumindest einen Wellendachs mit Wellenstegen der wellenförmigen Struktur aus Schritt (a) derart, dass der Außenradius der Blechkanten zwischen Wellendach und Wellensteg reduziert wird.

Durch die Reduzierung des Außenradius der Blechkante wird erreicht, dass sich während des Lötvorgangs im Lötofen zwischen dem jeweiligen Trennblech und einem Wellendach eine optimale Lotschicht ausbildet. Hierdurch wird erreicht, dass die Lotschicht zwischen Trennblech und Wellendach der Lamelle vorzugsweise zu mehr als 80 %, besonders bevorzugt zu mehr als 90 % den senkrecht auf das Trennblech projizierten Querschnitt eines Wellenstegs mit gleichbleibender Lotschichtdicke abdeckt. Dies gewährleistet, dass die während des Betriebs des Plattenwärmeaustauschers durch den Mediendruck auf die Trennbleche wirkende Druckbelastungen über die gesamte Breite der Wellenstege optimal eingeleitet werden, wodurch die maximale mechanische Belastbarkeit der Wellenstege ausgeschöpft wird. Hierdurch können Berstdrücke von über 600 bar erreicht werden.

Die erfindungsgemäß hergestellte Lamelle weist eine hohe Knickfestigkeit auf. Hierdurch können dünnwandige Lamellen mit Wandstärken von weniger als 0,3mm in größerer Anzahl als bisher im Fertigungsprozess aufeinander aufgestapelt werden und somit die Anzahl der Passagen eines Plattenwärmetauschers und dessen Höhe gesteigert werden.

Vorzugsweise wird der Außenradius der Blechkante, der nach einem Umformschritt gemäß Schritt (a) meist in einem Bereich von 0,2mm bis 1,6mm, häufig in einem Bereich von 0,4 bis 1,4mm, liegt, in Schritt b) beim Druckumformen zu einen Außenradius im Bereich von vorzugsweise 0,05mm bis 1,5mm, bevorzugt 0,05mm bis 0,90mm, weiter besonders bevorzugt 0,05mm bis 0,30mm, weiter besonders bevorzugt von 0,05mm bis 0,18mm, weiter besonders bevorzugt 0,07mm bis 0,18mm, weiter besonders bevorzugt von 0,07mm bis 0,12mm und weiter besonders bevorzugt von 0,10mm bis 0,12mm reduziert.

Beim Druckumformen gemäß Schritt b) handelt es sich um ein Verfahren zum Umformen der bereitgestellten wellenförmigen Struktur, wobei ein plastischer Zustand zumindest eines Teils des Werkstoffs herbeigeführt wird, insbesondere derart, dass eine Umlagerung von Werkstoff von den Wellenstegen in den Bereich der Blechkanten ermöglicht wird. Beim Druckumformen gemäß Schritt (b) wird also vorzugsweise ein plastischer Zustand erreicht, der eine Korngrenzenverschiebung innerhalb des Werkstoffs ermöglicht. Die Druckbeanspruchung während des Druckumformens kann ein- oder mehrachsig sein. Vorzugsweise erfolgt ein Druckumformen nach DIN8583. Besonders bevorzugt wird beim Druckumformen gemäß Schritt b) eine Flächenpressung, bevorzugt durch einen ebenflächigen Stempel, (vorzugsweise senkrecht) von außen auf mindestens ein Wellendach aufgebracht, während weiter vorzugsweise die an das Wellendach angrenzenden Wellenstege durch eine Matrize seitlich fixiert sind und weiter bevorzugt die an die Wellenstege angrenzenden zweiten und dritten Wellendächer durch eine Matrize gestützt werden. Dabei kann die Matrize ein- oder mehrteilig ausgebildet sein. Beim Fließpressen, das im Rahmen der vorliegenden Erfindung besonders bevorzugt als Druckumformverfahren eingesetzt wird, wird das Material des Körpers unter einem Druck zum Fließen - d.h. plastischen Verformen - gebracht der vorzugsweise höher ist als die Dehngrenze mit 0,2% plastischer Verformung, die auch als R_{p0,2} [N/mm²] in Werkstoffdatenblättern angegeben wird. Diese Dehngrenze als R_{p0,2} [N/mm²] kann in einem Zugversuch nach ASTM B557M-15 werden. Vorzugsweise wird daher ein Druck von mindestens 80 N/mm²-auf das Material aufgebracht. Dabei drückt in der Regel ein Stempel den Körper in bzw. ggf. durch eine Matrize.

Bevorzugt wird ein Kaltfließpressen eingesetzt, bei welchem keine Wärme von außen in das Material eingebracht wird. D.h. in anderen Worten wird das Fließpressen bei Umgebungstemperatur durchgeführt, also in der Regel bei Temperaturen unter 50°C, insbesondere unter 40°C. Kaltes Fließpressen ermöglicht eine hohe Formgenauigkeit. Sowohl ein Vorwärtsfließpressen als auch ein Rückwärtsfließpressen sowie ein Querfließpressen können eingesetzt werden. Auch beliebige Kombinationen der genannten Fließpressverfahren sind anwendbar. Beim Vorwärtsfließpressen ist der Werkstofffluss in Wirkrichtung des Stempels gerichtet, beim Rückwärtsfließpressen hingegen ist der Werkstofffluss entgegen der Wirkrichtung des Stempels gerichtet. Beim Querfließpressen ist der Werkstofffluss quer zur Wirkrichtung des Stempels gerichtet.

Vorzugsweise werden beim Druckumformen gemäß Schritt b) das zumindest eine Wellendach und die Wellenstege in eine rechtwinklige Anordnung, d.h. in einen Winkel von 90° mit einer Abweichung von vorzugsweise weniger als 1°, besonders bevorzugt von weniger als 0,5° zueinander gebracht, bzw. falls eine rechtwinklige Anordnung bereits vor dem Druckumformen bestand, werden Wellendach und Wellenstege in ihrer rechtwinkligen Anordnung gehalten. Hierdurch ist gewährleistet, dass die während des Betriebs des Plattenwärmeaustauschers durch den Mediendruck auf die Trennbleche wirkenden Druckbeanspruchungen ohne Querbelastungen als Zugkräfte senkrecht in die Wellenstege eingeleitet werden, wodurch die maximale Zugfestigkeit der Wellenstege ausgeschöpft werden kann. Nach dem Biegeumformen eines ebenen Metallblechs zu der beschriebenen wellenförmigen Struktur, die vorzugsweise in Schritt a) bereit gestellt wird, sind Wellendach und Wellenstege hingegen in der Regel nicht ideal rechtwinklig zueinander angeordnet, sondern weisen Abweichungen von einigen Winkelgraden - von bis zu 3° - auf.

Bei dem Druckumformen gemäß Schritt b) wird die wellenförmige Struktur vorzugsweise in ihrer Höhe reduziert. Die Höhenreduzierung liegt vorzugsweise im Bereich von 0,4mm bis 1,2mm, besonders bevorzugt im Bereich von 0,8mm bis 1,0mm. Die Teilung bleibt vorzugsweise unverändert. Dabei wird während des Druckumformens plastizierter bzw. fließbar gemachter Werkstoff aus den Wellenstegen und dem Wellendach in einen Bereich der Blechkante zwischen Wellendach und Wellensteg verschoben, wodurch der Außenradius der Blechkante reduziert wird.

Die in Schritt a) bereitgestellte, wellenförmige Struktur kann durch Umformen eines vorzugsweise ebenen Bleches nach einem im Stand der Technik bekannten Umformverfahren erhalten werden. Demnach umfasst der Verfahrensschritt a) außer dem Bereitstellen der wellenförmigen Struktur auch vorzugsweise das vorherige Fertigen der wellenförmigen Struktur durch ein Umformverfahren. Dies sind vorzugsweise Umformverfahren nach DIN 8582. Vorzugsweise erfolgt die Umformung des Bleches durch Biegeumformen. Dies kann umfassen ein Biegen mit geradliniger Werkzeugbewegung, drehender Werkzeugbewegung oder Kombination von beiden Bewegungen. In allen drei genannten Fällen wird das Blech auf Biegung beansprucht. Vorzugweise erfolgt ein Biegeumformen nach DIN 8586.

Das erfindungsgemäße Herstellverfahren für die Lamelle besitzt den Vorteil, dass die Wandstärke der Wellenstege im Vergleich zur Wandstärke des ebenen Blechs als Ausgangsmaterial kaum verändert wird. Dies ist für die Festigkeit der Lamelle im gelöteten Verbund mit den Trennplatten eines Plattenwärmetauschers von großer Bedeutung.

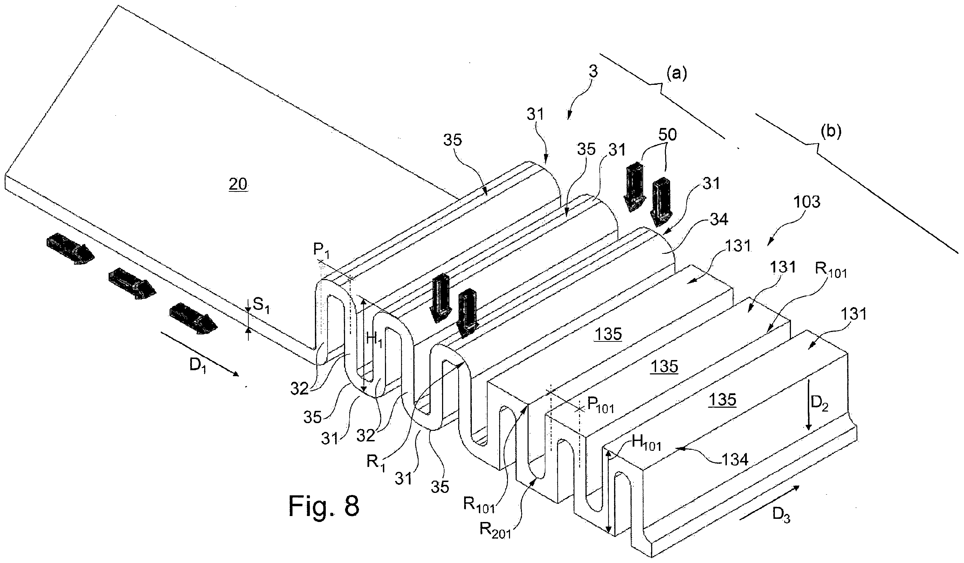

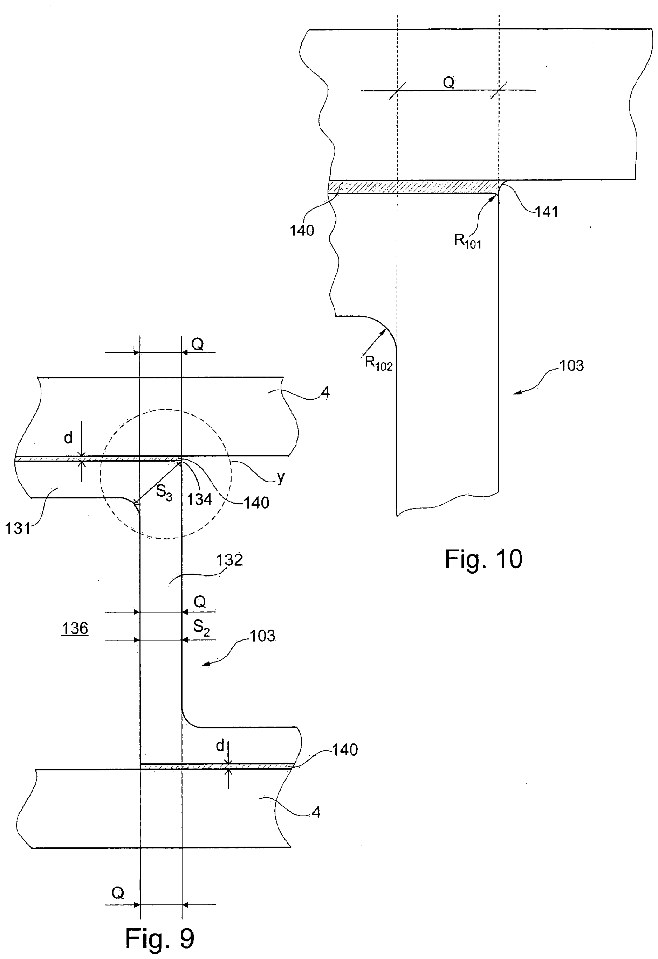

Mit dem Verfahren gemäß der vorliegenden Erfindung wird eine Lamelle erhalten, bei der die Wandstärke der Stege nur geringfügig verringert ist gegenüber der Wandstärke des ebenen Blechs, welches das Ausgangsmaterial bildet. Die prozentuale Wandstärkenverringerung wird nach folgender Formel berechnet: ((S1-S2)/S1)^{∗}100, wobei S1 die Wandstärke des ebenen Blechs als Ausgangsmaterial ist und S2 die Wandstärke des Wellenstegs nach dem Druckumformen gemäß Schritt (b). Die prozentuale Wandstärkenverringerung ist also definiert als die Differenz der Wandstärke S2 (in Fig. 9 eingezeichnet) der Wellenstege nach dem Druckumformen gemäß Schritt b) und der Wandstärke S1 des ebenen Blechs als Ausgangsmaterial (S1 in Fig. 8) geteilt durch die Wandstärke S1 des ebenen Blechs als Ausgangsmaterial multipliziert mit 100, um die prozentualen Anteile zu erhalten. Diese Wandstärkenverringerung beträgt bei der vorliegenden Erfindung weniger als 10%, besonders bevorzugt weniger als 5% und weiter besonders bevorzugt weniger als 1%. Dies ist mit den herkömmlichen ausschließlichen Biegeumformverfahren für eine Lamelle nicht erreichbar. Bei den ausschließlichen Biegeumformverfahren für eine Lamelle beträgt die Wandstärkenverringerung in der Regel mindestens 20%.

Mit dem Verfahren gemäß der vorliegenden Erfindung wird die Wandstärke der Lamelle im Bereich der druckumgeformten Blechkante, also im gekrümmten Übergangsbereich von einem Wellendach zu einem Wellensteg, im Vergleich zur Wandstärke des ebenen Blechs als Ausgangsmaterial in vorteilhafter Weise vergrößert. Die prozentuale Wandstärkenzunahme im Bereich der druckumgeformten Blechkante, wird nach folgender Formel berechnet: ((S3-S1)/S1)^{∗}100. Dabei ist S3 die transversale Wandstärke S3 (Fig. 9) im Bereich der druckumgeformten Biegekante und S1 (Fig. 8) die Wandstärke des Blechs, welches das Ausgangsmaterial darstellt. Diese Wandstärkenzunahme ist also definiert als die Differenz von S3 und S1 geteilt durch S1 multipliziert mit 100, um die prozentuale Zunahme zu erhalten. Die Wandstärkenzunahme beträgt im Bereich der druckumgeformten Blechkante vorzugsweise mehr als 1%, besonders bevorzugt mehr als 5% und weiter besonders bevorzugt mehr als 10%. Mit den herkömmlichen Biegeumformverfahren für eine Lamelle ist eine Wandstärkenzunahme im Bereich der Blechkante nicht erreichbar. Bei den ausschließlichen Biegeumformverfahren nach dem Stand der Technik tritt in der Regel eine Verringerung der Wandstärke der Lamelle im Bereich der biegeumgeformten Blechkante ein.

Bei dem erfindungsgemäßen Herstellverfahren für eine Lamelle folgen bei der wellenförmigen Struktur, die in Schritt a) bereitgestellt wird, vorzugsweise Wellendach und Wellensteg in einer ersten Raumrichtung alternierend aufeinander. Die erste Raumrichtung stimmt vorzugsweise überein mit der Vorschubrichtung des Bleches beim Umformen des Bleches zu der in Schritt a) genannten wellenförmigen Struktur. Vorzugsweise erfolgt beim Druckumformen nach Schritt b) der Vorschub der wellenförmigen Struktur auch in diese erste Raumrichtung. Vorzugsweise stimmt zudem die Vorschubrichtung des Bleches beim Flachwalzen zum Erhalt eines ebenen Bleches vor dem Umformen zu der in Schritt a) genannten wellenförmigen Struktur mit der ersten Raumrichtung überein. Dies bedeutet in anderen Worten, dass die Vorschubrichtung des Bleches beim Flachwalzen besonders bevorzugt gleich ist mit der Vorschubrichtung des Bleches beim Umformen zur in Schritt a) genannten wellenförmigen Struktur sowie der Vorschubrichtung der wellenförmigen Struktur beim Druckumformen nach Schritt b).

Vorzugsweise erfolgen das in Schritt a) erwähnte Umformen, vorzugsweise Biegeumformen, eines Bleches zu einer wellenförmigen Struktur und das Druckumformen gemäß Schritt b) in einer Vorrichtung oder in zwei oder mehreren hintereinander angeordneten Vorrichtungen. Hierdurch ist es möglich ein Blech von einem Coil zu verarbeiten ohne Materialunterbrechung zwischen dem in Schritt a) erwähnten Umformen und dem in Schritt b) beschriebenen Druckumformen. Ein Zwischenlagern von wellenförmig strukturiertem Blech entfällt dadurch. Im Rahmen der Erfindung ist es jedoch auch möglich, ein schon bereits vorgefertigtes Blech mit wellenförmiger Struktur einem Druckumformen nach Schritt b) zu unterziehen.

Besonders bevorzugt werden das Umformen des Bleches zur wellenförmigen Struktur nach Schritt a) und das Druckumformen nach Schritt b) ohne Materialflussunterbrechung, vorzugsweise in derselben Vorrichtung zeitlich nacheinander durchgeführt. Dabei wird vorzugsweise zunächst das Blech mit mindestens einem Wellendach - also einem Wellendach oder beispielsweise 2 oder 3 Wellendächern - mit jeweiligen Wellenstegen zu der wellenförmigen Struktur umgeformt, vorzugsweise durch Biegeumformen, und nachfolgend, vorzugsweise in gleicher Vorschubrichtung wie beim Umformen in Schritt a), das mindestens eine Wellendach mit Wellenstegen gemäß Schritt b) druckumgeformt, vorzugsweise fließgepresst.

Besonders bevorzugt ist ein Verfahren, bei welchem zunächst ein einziges, erstes, Wellendach mit angrenzenden Wellenstegen durch Umformen, vorzugsweise durch Biegeumformen, des Blechs gebildet wird und anschließend dieses erste Wellendach mit angrenzenden Wellenstegen druckumgefomt wird, bevor ein zweites Wellendach mit Wellenstegen, insbesondere durch Umformen, vorzugsweise Biegeumformen, mit anschließendem Druckumformen, gebildet wird. In anderen Worten wird also zunächst eine Welle, aus Wellenberg und angrenzenden Wellenstegen, durch Biegeumformen vorgeformt und unmittelbar im Anschluss druckumgefomt, bevor die nächste Welle gebildet wird. Ein Vorschub des Bleches kann zwischen dem Umformen der ersten Welle nach Schritt a) und dem Druckumformen der ersten Welle gemäß Schritt b) erfolgen oder es ist kein Materialvorschub vorgesehen, dann kann dieser zwischen dem Formen der ersten Welle und der zweiten Welle erfolgen.

Gemäß der vorliegenden Erfindung wird auch ein Verfahren zur Herstellung eines Plattenwärmetauschers bereitgestellt, bei welchem eine Mehrzahl von Trennblechen und Lamellen in einem Stapel abwechselnd übereinander angeordnet werden und in einem Lötofen miteinander verlötet werden, um einen quaderförmigen Wärmetauscherblock zu bilden. Erfindungsgemäß ist zumindest eine der Lamellen nach einem oben beschriebenen Herstellungsverfahren gefertigt. Vorzugsweise sind die Trennbleche mit einer Lotschicht versehen, die besonders bevorzugt durch Plattieren auf die Trennbleche aufgebracht ist.

Die erfindungsgemäß hergestellte Lamelle weist eine höhere Knickfestigkeit auf als Lamellen, die ausschließlich nach Biegeumformverfahren des Standes der Technik gefaltet wurden. Hierdurch können bei der Fertigung des Plattenwärmetauschers die Trennplatten und Lamellen in einem höheren Stapel aufgeschichtet werden, ohne dass Lamellen in unteren Passagen durch die Gewichtskraft der darüber liegenden Trennplatten und Lamellen geknickt werden. Bezüglich weiterer Vorteile des mit dem Herstellverfahren gefertigten Plattenwärmetauschers wird auf obige Ausführungen verwiesen.

Mit dem erfindungsgemäßen Verfahren kann vorzugsweise eine Lamelle aus Aluminium oder einer Aluminiumlegierung für einen Plattenwärmeaustauscher bereitgestellt werden, aufweisend eine wellenförmige Struktur aus einem Blech:
- mit parallel zueinander angeordneten Wellendächern, wobei ein Wellendach über einen Wellensteg mit einem weiteren Wellendach verbunden ist,
- wobei in einer ersten Raumrichtung Wellendach und Wellensteg aufeinander folgen,
- wobei Wellendach und Wellensteg durch eine Blechkante miteinander verbunden sind,
- wobei jede Blechkante einen Innenradius und einen Außenradius aufweist, und
- wobei die Wellendächer eine plane Außenfläche aufweisen.

Vorzugsweise beträgt der Außenradius der Blechkante zwischen 0,05mm und 0,18mm, vorzugsweise zwischen 0,10mm und 0,15mm, besonders bevorzugt zwischen 0,10mm und 0,12mm. Es hat sich gezeigt, dass sich während des Lötvorgangs im Lötofen bei einem Außenradius der Blechkante in den oben definierten Bereichen zwischen dem benachbarten Trennblech und dem Wellendach der Lamelle eine Kehlnaht aus Lot im Bereich der Blechkante ausgebildet, die eine optimale Krafteinleitung vom Trennblech in den Wellensteg ermöglicht.

Die Bestimmung der Außenradien erfolgt im Rahmen der vorliegenden Erfindung, indem ein Lamellenabschnitt mit mehreren Wellendächern und Wellenstegen in Kunststoff eingegossen und anschließend in einer Ebene senkrecht zu den Wellendächern und Wellenstegen aufgetrennt und oberflächlich glatt geschliffen wird. Mithilfe eines 3-Punkt Messverfahrens wird anschließend der Außenradius der Blechkante zwischen Wellendach und Wellensteg ermittelt. Hierzu werden drei Punkte auf dem glatt geschliffenen Querschnitt der Blechkante am Außenrand der Blechkante angetragen und deren Position zueinander mithilfe einer Messeinrichtung und einem Mikroskop ermittelt. Aus den ermittelten zweidimensionalen Koordinaten der drei Punkte wird der Außenradius rechnerisch ermittelt.

Der Innenradius der Blechkante beträgt vorzugsweise 0,2mm bis 0,4 mm, besonders bevorzugt 0,3mm.

Die Bestimmung des Innenradius der Blechkante erfolgt in gleicher Weise wie die vorstehend beschriebene Bestimmung des Außenradius der Blechkante. Im Unterschied zu obigem Verfahren werden die Messpunkte auf den Innenrand der Blechkante aufgetragen.

Die Wandstärke der Lamelle, und somit die Wandstärke der Wellendächer und der Wellenstege, beträgt vorzugsweise 0,2mm bis 1,0mm. Vorzugsweise weisen die Wellendächer und die Wellenstege innerhalb einer erfindungsgemäßen Lamelle eine gleiche Wandstärke im oben definierten Bereich auf. In anderen Worten bedeutet dies, dass die Wellendächer und Wellenstege der erfindungsgemäßen Lamelle vorzugsweise gerade Wandabschnitte mit gleicher Wandstärke bilden, wobei jeweils ein Wellendach über eine scharfkantig gekrümmte Blechkante mit einem Wellensteg verbunden ist.

Die Lamelle ist durch Umformen eines ebenen Metallbleches gebildet, gemäß dem erfindungsgemäßen Verfahren durch Umformen in zwei oder mehreren Umformverfahrensschritten, bevorzugt nach einem oder mehreren in DIN8582 beschriebenen Umformverfahren.

Vorzugsweise abschließender Umformverfahrensschritt ist ein Druckumformen vorzugsweise nach DIN8583, besonders bevorzugt ein kaltes Fließpressen, bei welchem die Außenradien der Blechkanten in den gewünschten, oben definierten Bereich gebracht werden.

Vorzugsweise umfasst das Druckumformen weder ein Biegen noch ein Ziehen des Lamellenmaterials. Bei der erfindungsgemäßen Lamelle ist der abschließende Druckumformverfahrensschritt, insbesondere Fließpressschritt, dadurch erkennbar, dass das Gefüge insbesondere im Bereich der Blechkante im Übergang von einem Wellendach zu einem Wellensteg kugelförmige Körner aufweist. Vorzugsweise weist das Gefüge zu mehr als 50%, besonders bevorzugt zu mehr als 80% und weiter bevorzugt zu mehr als 95% Gefügekörner auf, die eine Kugelform besitzen. Die kugelförmige Körnerstruktur ist in einem Gefügeschliffbild nachweisbar.

Im Vergleich hierzu weisen Lamellen, die ausschließlich durch ein Biegeumformen oder eine spanabhebende Fertigung hergestellt wurden, Gefüge mit langgestreckten, reiskornförmigen Körnerstrukturen auf. Grund hierfür ist, dass zum Biegeumformen und zur spanabhebenden Fertigung flachgewalzte Bleche eingesetzt werden, die diese Gefügestruktur mit langgestreckten, reiskornförmigen Körnern bereits vor dem Biegeumformen und der spanabhebenden Fertigung aufweisen. Durch Biegeumformen können diese langgestreckten Körner noch weiter gestreckt sein.

In der Regel weist die Oberfläche der Lamelle, nach dem Druckumformschritt eine mittlere Rauigkeit Rₐ von weniger als 0,4µm (Mikrometer) auf, meist liegt sie im Bereich von 0,2µm bis 0,4µm. Diese Oberflächenrauheitswerte sind bedingt durch das Werkzeug, das bei dem erfindungsgemäßen Druckumformen eingesetzt wird. Die Oberflächenrauheitswerte der auf die Lamelle einwirkenden Werkzeugoberfläche, beispielsweise eines Stempels, werden beim Druckumformen auf die Lamelle übertragen.

Die mittlere Rauheit Rₐ gibt den mittleren Abstand eines Messpunktes - auf der Oberfläche - zur Mittellinie an. Die Mittellinie schneidet innerhalb der Bezugsstrecke das wirkliche Profil so, dass die Summe der Profilabweichungen (bezogen auf die Mittellinie) minimal wird. Die mittlere Rauheit Rₐ entspricht also dem arithmetischen Mittel der betragsmäßigen Abweichung von der Mittellinie. Mithilfe des abschließenden Druckumformverfahrensschritts ist die mittlere Rauheit der Lamellenoberfläche reduziert gegenüber der Oberfläche einer Lamelle, die ausschließlich durch Biegeumformen mit oder ohne Ziehen des Materials gefertigt ist. Die mittlere Rauheit Rₐ der Oberfläche von durch Biegeumformen gebildeten Lamellen liegt bei etwa 10µm.

Vorzugsweise ist die Lamelle gebildet durch einen Biegeumformschritt, an den sich ein Druckumformschritt anschließt. Bei dem Biegeumformschritt, vorzugsweise nach DIN8586, wird ein - vorzugsweise ebenes - Metallblech in eine wellenförmige Struktur mit mindestens einem Wellendach mit Wellenstegen gebracht.

Ein Biegeumformen im Rahmen der vorliegenden Erfindung kann ein reines Biegeumformen durch Schwenken um eine Biegeachse umfassen, als auch ein Schwenken um eine Biegeachse mit einem Ziehformschritt, bei welchem das Blech zusätzlich in eine Raumrichtung gezogen wird. Daran schließt sich vorzugsweise der Druckumformverfahrensschritt, vorzugsweise kalte Fließpressverfahrensschritt an, bei welchem der Außenradius der beim biegeumformen gebildeten Blechkanten zwischen Wellendach und Wellensteg reduziert wird. Der Innenradius der Blechkanten verändert sich bei dem abschließenden Druckumformverfahrensschritt vorzugsweise nicht. Das weiter bevorzugte Herstellverfahren wird nachstehend noch näher erläutert.

Vorzugsweise sind bei der erfindungsgemäß hergestellten Lamelle Wellendach und Wellenstege rechtwinklig, d.h. in einem Winkel von 90° mit einer Abweichung von vorzugsweise weniger als 1°, besonders bevorzugt von weniger als 0,5° zueinander angeordnet. Hieraus folgt, dass auch die Wellenstege der erfindungsgemäß hergestellten Lamelle vorzugsweise parallel zueinander angeordnet sind. Zudem weist das mindestens eine Wellendach eine plane, also ebene Außenfläche auf, um eine optimale Löt-Verbindungsfläche zu einem Trennblech in einem Plattenwärmetauscher bereitzustellen. Die Lamellendächer weisen jeweils von einer Blechkante zur benachbarten Blechkante vorzugsweise eine max. Abweichung in ihrer Ebenheit von 0,02 mm auf.

Vorzugsweise ist die Lamelle perforiert und/oder geschnitten (zweites im Englischen auch als "serrated" bezeichnet) ausgeführt wie in "The standards of the brazed aluminium plate-fin heat exchanger manufactures association" ALPEMA, Third Edition, 2010 auf Seiten 9 und 10 gezeigt und beschrieben. Vorteilhafterweise besteht die Lamelle aus Aluminium oder einer Aluminiumlegierung, besonders bevorzugt aus einer EN-AW 3003 Legierung nach Europäischen Standard. Eine Aluminiumlegierung gemäß der vorliegenden Erfindung weist demnach als Hauptbestandteil Aluminium auf, vorzugsweise mit einem Massenprozentanteil von Aluminium an der Gesamtlegierung von mindestens 90% Aluminium, besonders bevorzugt von mindestens 95% Aluminium, und von vorzugsweise weniger als 99,9% Aluminium, besonders bevorzugt von weniger als 99% Aluminium. Besonders bevorzugt liegt der Massenanteil von Aluminium in der Aluminiumlegierung im Bereich von 96,8% bis 99%. Weitere Legierungsbestandteile können sein ein oder mehrere ausgewählt aus der Gruppe: Mangan, Eisen, Kupfer oder Silizium. Der Mangangehalt der Aluminiumlegierung in Massenprozent liegt vorzugsweise im Bereich von 1,0% bis 1,5% Mangan. Der Eisengehalt der Aluminiumlegierung in Massenprozent liegt vorzugsweise bei weniger als 0,7%. Der Massenprozentanteil von Kupfer in der Aluminiumlegierung beträgt vorzugsweise weniger als 0,2%. Vorzugsweise weist die Aluminiumlegierung einen Silizium-Gehalt in Massenprozent von weniger als 0,5%, besonders bevorzugt von weniger als 0,1% auf.

Die vorliegende Erfindung ermöglicht die Herstellung eines gelöteten Plattenwärmetauschers mit einer Mehrzahl von in einem Stapel und mit Abstand zueinander angeordneter Trennplatten, die Passagen für zumindest zwei in indirekten Wärmeaustausch tretende Fluide bilden, wobei zumindest eine Passage eine vorstehend beschriebene Lamelle oder ggf. mehrere der vorstehend beschriebenen Lamellen aufweist. Durch zwischen den Trennplatten in der Regel angeordneten Seitenleisten (im Englischen: Sidebars) sind die Passagen seitlich begrenzt. Bei den Trennplatten handelt es sich im Allgemeinen um ebene Trennplatten aus Blech, die vorzugsweise wie die Lamelle aus Aluminium oder einer Aluminiumlegierung gebildet sind.

Vorzugsweise deckt bei dem Plattenwärmetauscher die Lotschicht zwischen Trennblech und Wellendach der Lamelle zu mehr als 80%, bevorzugt zu mehr 90%, besonders bevorzugt zu mehr als 95% den senkrecht auf das Trennblech projizierten Querschnitt eines Wellenstegs mit gleichbleibender Lotschichtdicke ab.

Mit der erfindungsgemäß hergestellten Lamelle können obige Lot-Abdeckungsgeometrien erreicht werden und damit Berstdrücke des Plattenwärmetauschers von mehr als 600 bar bei Verwendung einer EN-AW 3003 Aluminium-Legierung für die Lamelle realisiert werden.

Vorzugsweise sind alle für den Mediendurchfluss vorgesehenen Passagen des Plattenwärmetauschers mit einer oder mehreren der vorstehend beschriebenen Lamellen ausgestattet. Dabei kann der Plattenwärmetauscher im Übrigen die gleichen Bauteile und den denselben Aufbau aufweisen wie eingangs zu Fig. 1 beschrieben.

Der Plattenwärmetauscher kann auch für eine Core-in-Shell bzw. Block-in-Kettle - Wärmetauscheranordnung eingesetzt werden, wie sie in "The standards of the brazed aluminium plate-fin heat exchanger manufactures association" ALPEMA, Third Edition, 2010, auf den Seiten 66 bis beschrieben und dargestellt ist.

Vorzugsweise sind die Bauteile wie Deckbleche, Trennbleche und Seitenleisten des Plattenwärmetauschers aus Aluminium oder einer Aluminiumlegierung gebildet, wie insbesondere in "The standards of the brazed aluminium plate-fin heat exchanger manufactures association" ALPEMA, Third Edition, 2010 auf den Seite 45 und 46 beschrieben.

Die Trennbleche, die auch als Trennplatten bezeichnet werden können, weisen vorzugsweise eine Wandstärke im Bereich von 1,0mm bis 3,0 mm, besonders bevorzugt von 1,2 bis 2,5 mm und weiter besonders bevorzugt von 1,4 bis 1,7 mm auf. Die Deckbleche sind in der Regel mit einer größeren Wandstärke ausgeführt wie die jeweiligen Trennbleche innerhalb des Wärmetauscherblocks. Die Deckbleche weisen daher vorzugsweise eine Wandstärke im Bereich von 3 bis 12 mm, besonders bevorzugt von 5 bis 8 mm auf.

Die Lamelle gemäß der vorliegenden Erfindung kann vorteilhaft eingesetzt werden für Plattenwärmetauscher in den unterschiedlichsten Prozessabschnitten in Luftzerlegungsanlagen, petrochemischen Anlagen, Wasserstoffanlagen, Synthesegasanlagen oder Erdgasanlagen. Vorteilhaft ist die Lamelle einsetzbar für Anwendungen im Temperaturbereich von weniger als 80°C, vorzugweise für kryogene Anwendungen bei Temperaturen im Bereich von 0°C bis -270°C.

Im Folgenden wird die Erfindung anhand von Ausführungsbeispielen näher erläutert.

Es zeigt:
- Fig. 1: einen Plattenwärmeaustauscher aus "The standards of the brazed aluminium plate-fin heat exchanger manufactures association" ALPEMA, Third Edition, 2010, Seite 5;
- Fig. 2: eine biegeumgeformte Lamelle 3 in perspektivischer Ansicht;
- Fig. 3: die Lamelle von Fig. 2 nach einem Druckumformschritt gemäß der vorliegenden Erfindung;
- Fig. 4: eine biegeumgeformte, geschnittene Lamelle 3 in perspektivischer Ansicht;
- Fig. 5: die Lamelle von Fig. 4 nach einem Druckumformschritt gemäß der vorliegenden Erfindung;
- Fig. 6: eine biegeumgeformte, perforierte Lamelle 3 in perspektivischer Ansicht;
- Fig. 7: eine Lamelle nach Fig. 6 nach einem Druckumformschritt gemäß der vorliegenden Erfindung;
- Fig. 8: eine perspektivische Ansicht eines Bleches mit biegeumgeformten und fließgepressten Abschnitten gemäß einem erfindungsgemäßen Herstellverfahren für eine Lamelle;
- Fig. 9: einen Querschnitt durch eine erfindungsgemäße Lamelle 103 mit verlöteten Trennblechen 4;
- Fig. 10: den Detailausschnitt Y von Fig. 9;
- Fig. 11: einen Querschnitt durch eine biegeumgeformte Lamelle 3 mit verlöteten Trennblechen 4 gemäß dem Stand der Technik;
- Fig. 12: eine schematische Darstellung des Gefüges eines Blechs 20 oder einer biegeumgeformten Lamelle 3 nach Schritt (a) von Fig.8;
- Fig. 13: eine schematische Darstellung des Gefüges einer erfindungsgemäßen Lamelle 103 von Fig. 8 nach dem Druckumformschritt (b).

Der Plattenwärmetauscher gemäß Fig. 1 wurde bereits im einleitenden Teil der vorliegenden Beschreibung erläutert. Eine Ausgestaltung eines Plattenwärmeaustauschers weist den gleichen Aufbau wie in Fig. 1 gezeigt auf, ist jedoch mit zumindest einer der vorstehend allgemein beschriebenen oder nachfolgend in Bezug auf Fig. 3, 5, 7, 8, 9 und 10 beschriebenen Lamellen 103 ausgestattet.

Fig. 2 zeigt eine Lamelle 3 nach dem Stand der Technik, die durch Biegeumformen eines ebenen Metallbleches mit der Wandstärke S1 erhalten wird. Die Lamelle 3 weist eine wellenförmige Struktur mit unteren und oberen Wellendächern 31 auf, die über Wellenstege 32 miteinander verbunden sind. Die Wellendächer 31 und die Wellenstege 32 sind durch runde Biegekanten 34 verbunden, wobei die Biegekanten 34 jeweils einen Außenradius R1 und einen Innenradius R2 aufweisen. Der Außenradius R1 der Biegekanten 34 wird bestimmt durch den Innenradius R2 und die Wandstärke S1. In einer ersten Raumrichtung D1 folgen Wellendach 31 und Wellensteg 32 alternierend aufeinander. Die Höhe H1 der Lamelle 3 erstreckt sich in eine zweite Raumrichtung D2, die senkrecht zur ersten Raumrichtung D1 ausgerichtet ist.

In eine dritte Raumrichtung D3 erstrecken sich eine Mehrzahl von Kanäle 36, die jeweils durch ein Wellendach 31 mit angrenzenden Wellenstegen 32 gebildet sind und in einem Plattenwärmetauscher durch Trennbleche 4 begrenzt sind, mit denen die Lamelle 3 verlötet ist (Fig.11). Die Kanäle 36 werden im Betrieb des Plattenwärmetauschers von einem Medium in die Raumrichtung D3 (oder in deren Gegenrichtung) durchströmt. Die dritte Raumrichtung D3 ist sowohl senkrecht zur ersten Raumrichtung D1 als auch senkrecht zur zweiten Raumrichtung D2 ausgerichtet.

Mit dem Zeichen "P1" ist die Teilung der Lamelle 3 angegeben. Die Teilung P1 gibt die Länge eines sich in erste Raumrichtung D1 wiederholenden Strukturabschnittes der Lamelle 3 an. Hier ist dies der Abstand von der Wandmitte eines Wellenstegs 32 bis zur Wandmitte eines darauffolgenden Wellenstegs 32. Die vorliegende Lamelle 3 weist eine relativ kleine Teilung P1 bei einer relativ großen Wandstärke S1 und damit relativ großem Außenradius R1 auf. Hierdurch ist ein jeweils nur relativ kleiner Anteil der Außenfläche 35 eines Wellendachs 31 eben ausgebildet.

Fig. 3 zeigt eine Lamelle 103 gemäß einer Ausführungsform der vorliegenden Erfindung. Diese wurde gebildet durch ein Herstellungsverfahren, welches einen Biegeumformschritt mit nachfolgendem Druckumformschritt umfasst. Das Herstellungsverfahren wird in Bezug auf Fig. 8 nachfolgend noch näher erläutert.

Die Lamelle 103 gemäß Fig. 3 weist eine scharfkantige wellenförmige Struktur mit Wellendächern 131 und Wellenstegen 132 auf, die in erster Raumrichtung D1 alternierend aufeinander folgen. Die unteren und oberen Wellendächer 131 sind eben ausgebildet und verlaufen jeweils parallel zueinander, d.h. mit einer maximalen Abweichung von 1°, vorzugweise 0,5°. Die Wellenstege 132 sind jeweils rechtwinklig zu den Wellendächern 131 angeordnet. Daher verlaufen auch die Wellenstege 132, die sich in die zweite Raumrichtung D2 erstrecken, jeweils parallel zueinander, d.h. mit einer maximalen Abweichung von 1°, vorzugsweise 0,5°. Die Wellendächer 131 sind jeweils über scharfkantige Blechkanten 134 mit den Wellenstegen 132 verbunden. Die Blechkanten 134 weisen jeweils einen Außenradius R101 und einen Innenradius R102 auf. Die Innenradien betragen bei einer Aluminiumlegierung nach Europäischer Norm EN-AW-3003 vorzugsweise 0,2mm bis 0,4 mm und die Außenradien erfindungsgemäß 0,05mm bis 0,18mm. Die Teilung ist mit P101 angegeben und beträgt in der Regel 0,9mm bis 5,0mm. Die Höhe H101 der Lamelle 103 kann 4,0mm bis 12mm betragen. Die Wandstärke S101 kann im Bereich von 0,2mm bis 1,0mm liegen. Die scharfkante Kontur der Blechkanten 134 mit Außenradien R101 unter 0,2 mm wird erreicht durch einen Druckumformschritt, bei der die biegeumgeformte Lamelle 3 aus Fig. 2 vor allem in Richtung der zweiten Raumrichtung D2 gestaucht wird und somit in ihrer Höhe zu einer Höhe 101 reduziert wird. Die Höhenreduzierung beträgt in der Regel zwischen 0,8mm und 1,2mm. Die Wellendächer 131 weisen hierdurch über ihre gesamte Breite (Breite in erste Raumrichtung D1 verlaufend) abgesehen von den durch die Außenradien R101 bedingt gekrümmten Flächenbereichen ebene Außenflächen 135 zur optimalen Verbindung durch Verlöten mit ebenfalls ebenen, in Fig. 9 und 10 dargestellten Trennblechen 4 auf.

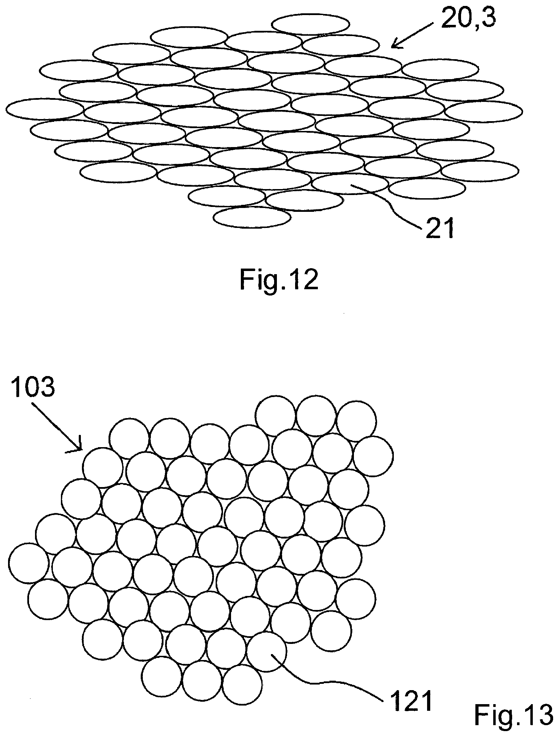

Fig. 8 zeigt eine Ausführungsform eines Herstellverfahrens für die in Fig. 3 gezeigte Lamelle 103. Ausgangsmaterial für die Herstellung der Lamelle 103 ist ein ebenes, glattes Metallblech 20 beispielsweise aus einer Aluminiumlegierung nach Europäischer Norm EN-AW-3003 mit einer Materialstärke bzw. Wandstärke S1. Das Metallblech 20 wird vorzugsweise von einem nicht dargestellten Blechcoil abgewickelt. Das ebene Metallblech 20 wird durch Flachwalzen eines Gußbarrens erhalten. Das Gefüge des Metallblechs 20 weist daher langgestreckte Körner 21 auf, wie in Fig. 12 schematisch dargestellt.

In einem ersten Schritt (a) des erfindungsgemäßen Herstellverfahrens wird das im linken Figurabschnitt dargestellte ebene Metallblech 20 durch Biegeumformen in eine wellenförmige Struktur mit ein, zwei, oder mehreren Wellendächern 31 mit jeweilig angrenzenden Wellenstegen 32, wie in Fig. 2 dargestellt und vorstehend beschrieben, gebracht. Vorzugsweise wirken hierzu- ein oder mehrere Werkzeuge in einer geradlinigen Bewegung von unten und/oder oben senkrecht auf das Blech 20 ein. Bevorzugt ist ein Gleitziehbiegen. Die mit Pfeilen eingezeichnete Vorschubrichtung D1 des Bleches 20 während des Gleitziehbiegens stimmt überein mit der in Fig. 2 eingezeichneten Raumrichtung D1. Das Biegeumformen kann auch durch eine drehende Bewegung des Werkzeuges erfolgen oder durch eine Kombination von geradliniger und drehender Werkzeugbewegung. Vorzugsweise erfolgt das Biegeumformen nach einem in DIN 8586 beschriebenen Verfahren. Das Gefüge (Fig.12) der biegeumgeformten Lamelle 3 weist nach dem Biegeumformen gemäß Schritt (a) langgestreckte, reiskornförmige Gefügekörner 21 auf ebenso wie das Blech 20, das das Ausgangsmaterial bildet. Im Bereich der runden Biegekanten 34 der Lamelle 3 können die Gefügekörner auch Krümmungen aufweisen, was jedoch nicht dargestellt ist. Beinhaltet das Biegeumformen auch einen Ziehumformanteil, so können die Körner 21 gegenüber dem im Blech 20 vorhandenen Gefüge weiter gestreckt sein, d.h. eine größere Länge aufweisen, was jedoch ebenfalls nicht dargestellt ist. Die Vorschubrichtung beim Flachwalzen des Blechs 20 stimmt vorzugweise mit der Raumrichtung D1 und damit mit der Vorschubrichtung D1 beim Biegeumformen gemäß Schritt (a) überein.

Die im ersten Schritt (a) gebildete runde wellenförmige Struktur 3, die im mittleren Figurenabschnitt der Fig. 8 gezeigt ist, wird nun in einem zweiten Schritt (b) des erfindungsgemäßen Herstellverfahrens durch Druckumformen weiter umgeformt. Hierzu wird auf die Außenfläche 35 eines oder mehrerer Wellendächer 31 der wellenförmigen Struktur beispielsweise mithilfe eines flachen Stempels (veranschaulicht durch die Pfeile 50) von außen eine Flächenpressung senkrecht aufgebracht. Während des Druckumformens wird die jeweilige Welle aus Wellendach 31 und angrenzenden Wellenstegen 32 in einer nicht dargestellten Matrize fixiert.

Durch die hohe Druckbeanspruchung wird das Metallmaterial in einen plastischen Zustand gebracht, in welchem es zu fließen beginnt. Das Druckumformen erfolgt bei Umgebungstemperatur, d.h. das Metall wird vor dem Druckumformen oder während des Druckumformens nicht von außen erwärmt. Es wird daher als kaltes Fließpressen bezeichnet. Bei diesem Fließpressen wird Metall vom gewölbten Wellendach 31 und von den angrenzenden Wellenstegen 32 in den Bereich der Biegekante 34 durch Fließen umgelagert. Hierdurch wird der Außenradius der Kante 34 von ursprünglich R1 auf R101 reduziert und die Lamelle in ihrer Höhe von H1 auf H101 gestaucht bzw. reduziert. Das Gefüge der druckumgeformten Lamelle 103 weist kugelförmige Gefügekörner 121, wie in Fig. 13 schematisch dargestellt, auf. Die so gefertigte Lamelle 103 weist eine Oberfläche mit einer mittleren Rauigkeit Ra von weniger als 0,4 µm auf.

Der Außenradius R101 (zurück zu Fig. 8) beträgt nach dem Druckumformschritt vorzugsweise unter 0,18mm, besonders bevorzugt unter 0,15mm. Die Vorschubrichtung beim Druckumformen erfolgt wie beim Biegeumformen in die Raumrichtung D1. Das Druckumformen der wellenförmigen Struktur erfolgt demnach hauptsächlich in die Raumrichtung D2.

Der Biegeumformschritt (a) und der Druckumformschritt (b) erfolgen bei der gezeigten Ausführungsform zeitlich nacheinander, vorzugsweise ohne Unterbrechung des Materialflusses in der gleichen Vorrichtung.

Ergebnis des erfindungsgemäßen Herstellverfahrens nach Fig. 8 ist die in Fig. 3 vorstehend bereits beschriebene Lamelle 103.

Die Lamelle 103 wird zur Herstellung eines Plattenwärmetauschers wie vorstehend zu Fig. 1 beschrieben verwendet. Statt der in Fig. 1 mit den Bezugsziffern 2 und 3 versehenden Lamellen werden Lamellen 103 gemäß Fig. 3 verwendet.

Beidseitig lotplattierte Trennbleche 4 werden abwechselnd mit Lamellen 103 und Randleisten 8 mit äußeren Deckblechen 5 in einem Stapel übereinander angeordnet und in einem Lötofen verlötet. Anschließend werden Header 7 mit Stutzen 6 auf den gelöteten Wärmetauscherblock aufgeschweißt.

Fig. 9 zeigt einen Querschnitt durch eine Lamelle 103 mit angrenzenden, verlöteten Trennblechen 4. Fig. 10 zeigt ein Detail Y aus Fig. 9. Aus beiden Figuren ist ersichtlich, dass zwischen den Wellendächern 131 und den Trennblechen 4 jeweils eine Lotschicht 140 mit einer gleichbleibenden Dicke d ausgebildet ist, die den senkrecht auf das Trennblech 4 projizierten Querschnitt Q des angrenzenden Wellenstegs zu 100% abdeckt. Hierdurch können die durch den Innendruck auf die Trennbleche 4 wirkenden Kräfte über die Lotschicht 140 in die Wellenstege 132 über deren gesamten Querschnitt Q senkrecht eingeleitet werden. Eine Kehlnaht 141 bildet sich bei einem Außenradius R101 im erfindungsgemäßen Bereich von 0,05mm bis 0,18mm außerhalb des projizierten Wellenstegquerschnitts Q aus, wodurch die vorgenannte optimale Lotschichtabdeckungsgeometrie erreicht wird.

In Fig. 9 ist die Wandstärke der druckumgeformten Lamelle 103 im Bereich des Stegs 132 mit der Bezugsziffer S2 angegeben. Mit dem Verfahren gemäß der vorliegenden Erfindung wird die Wandstärke S2 der Stege 132 nur geringfügig verringert im Vergleich zur Wandstärke S1 (Fig. 8) des ebenen Blechs 20, welches das Ausgangsmaterial darstellt. Die prozentuale Wandstärkenverringerung wird wie folgt berechnet: ((S1-S2)/S1)^{∗}100. Diese beträgt weniger als 10%, besonders bevorzugt weniger als 5% und weiter besonders bevorzugt weniger als 1%. Dies ist mit den herkömmlichen Biegeumformverfahren für eine Lamelle nicht erreichbar. Bei den ausschließlich biegeumgeformten Lamellen gemäß des Standes der Technik beträgt die prozentuale Wandstärkenverringerung in der Regel mindestens 20%.

Weiterhin ist in Fig. 9 eine transversale Wandstärke im Bereich der druckumgeformten Blechkante 134 mit der Bezugsziffer S3 eingetragen. Mit dem Verfahren gemäß der vorliegenden Erfindung wird die transversale Wandstärke S3 im Bereich der Blechkante 134 im Vergleich zur Wandstärke S1 (Fig. 8) des ebenen Blechs 20, welches das Ausgangsmaterial darstellt, vergrößert. Die prozentuale Wandstärkenzunahme wird berechnet wie folgt: ((S3-S1)/S1)^{∗}100. Diese beträgt vorzugsweise mehr als 1%, besonders bevorzugt mehr als 5% und weiter besonders bevorzugt mehr als 10%. Dies ist mit den herkömmlichen Biegeumformverfahren für eine Lamelle nicht erreichbar. Hier tritt in der Regel eine Verringerung der Wandstärke der Lamelle im Bereich einer ausschließlich biegeumgeformten Blechkante ein.

Fig. 11 zeigt die Verlötung einer ausschließlich biegeumgeformten Lamelle 3 gemäß Fig. 2 und damit gemäß dem Stand der Technik. Bei dieser liegt die Kehlnaht 41, die sich beim Löten zwischen der einen Außenradius R1 aufweisenden Biegekante 34 und dem Trennblech 4 ausbildet, im Bereich des projizierten Wellenstegquerschnitts Q. Im projizierten Querschnitt Q bildet sich keine Lotschicht mit gleichbleibender Dicke aus. Die Kehlnaht 41 überbrückt überdies nicht den gesamten projizierten Querschnitt Q des Wellenstegs 32: Flächenbereiche F der Wellenstege 32 sind nicht über eine geschlossene Lotschicht mit den Trennblechen 4 verbunden. Eine solche Lötverbindung hat sich als nachteilig für die Festigkeit des Plattenwärmetauschers erwiesen.

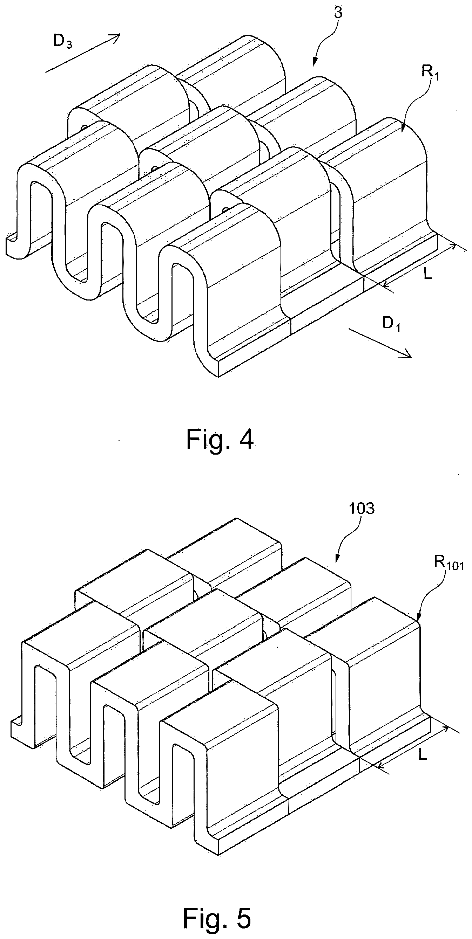

Fig. 4 zeigt eine biegeumgeformte, geschnittene Lamelle 3 nach Schritt (a) (Fig. 8) des erfindungsgemäßen Verfahrens und damit gemäß dem Stand der Technik. Diese wird durch Gleitziehbiegen eines ebenen Metallblechs hergestellt mit einem überlagerten gleichzeitig auftretenden Schnitt durch zueinander versetzte Einzelstempel. Der Versatz ist in Richtung D1 und wechselt sich über die gesamte Blechbreite in Richtung D3 ab. In der Regel betragen die Schnittlänge L zwischen 1,5 mm bis 50 mm. In einem anschließenden erfindungsgemäßen Druckumformschritt (b) (gemäß Fig. 8), dessen Ergebnis in Fig. 5 dargestellt ist, wird die runde wellenförmige Struktur von Fig. 4 in eine scharfkantige, wellenförmige Struktur von Fig. 5 übergeführt, bei welcher der Außenradius der Biegekante von R1 auf R101 vorzugsweise auf 0,05mm bis 0,18mm reduziert wird.

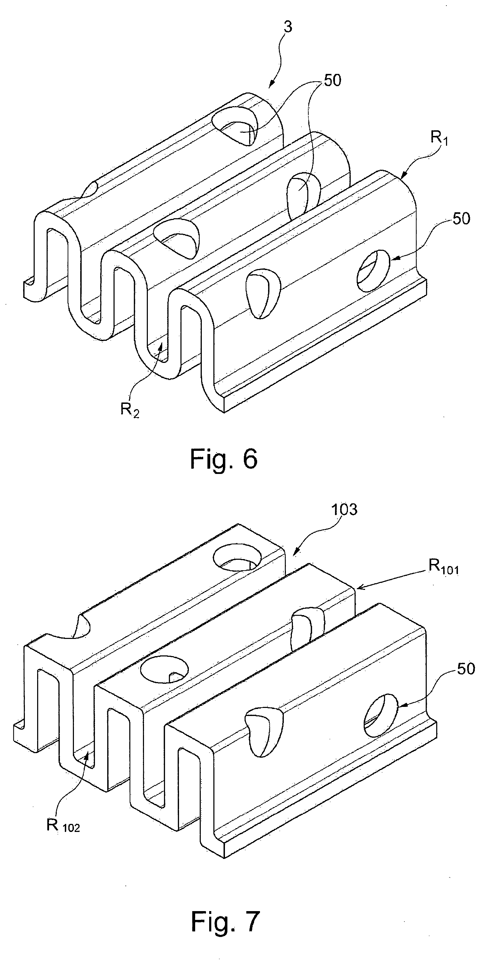

Fig. 6 zeigt eine biegeumgeformte, perforierte Lamelle 3 nach Schritt (a) (Fig. 8) des erfindungsgemäßen Verfahrens und damit gemäß dem Stand der Technik. Die Perforationen (Löcher 50) weisen in der Regel Abstände zwischen 2 mm und 30 mm und Durchmesser im Bereich von 1 mm und 3 mm auf. In einem anschließenden Druckumformschritt (b) (gemäß Fig. 8), dessen Ergebnis in Fig. 7 dargestellt ist, wird die runde, wellenförmige Struktur von Fig. 6 in eine scharfkantige Struktur von Fig. 7 überführt, bei welcher der Außenradius der Biegekante von R1 auf R101 auf 0,05mm bis 0,18mm reduziert wird.

Die Lamelle 103 gemäß der Fig. 3, 5 und 7 kann mit dem erfindungsgemäßen Verfahren in einer Breite (in Richtung D3) von beispielsweise 450mm und einer Länge (in Richtung D1) von 1500mm hergestellt werden.

**Bezugszeichenliste**

| | |
|---|---|
| Passage | 1 |
| Verteilerlamelle | 2 |
| biegeumgeformte Lamelle (Fin) | 3 |
| Trennblech | 4 |
| Deckblech | 5 |
| Stutzen | 6 |
| Sammler (Header) | 7 |
| Randleiste (Sidebar) | 8 |
| Ein- oder Austrittsöffnung | 9 |
| Wärmetauscherblock | 10 |
| erste Raumrichtung | D1 |
| zweite Raumrichtung | D2 |
| dritte Raumrichtung | D3 |
| Metallblech | 20 |
| Gefügekorn | 21 |
| Wellendach | 31 |
| Wellen steg | 32 |
| Biegekante | 34 |
| Außenfläche Wellendach | 35 |
| Kanal | 36 |
| Kehlnaht | 41 |
| Stempel | 50 |
| Außenradius | R1 |
| Innenradius | R2 |
| Höhe | H1 |
| Wandstärke Metallblech 20 | S1 |
| Teilung | P1 |
| Flächenbereiche | F |
| druckumgeformte Lamelle | 103 |
| Gefügekorn | 121 |
| Wellendach | 131 |
| Wellen steg | 132 |
| Blechkante | 134 |
| Außenfläche Wellendach | 135 |
| Kanal | 136 |
| Teilung | P101 |
| Außenradius | R101 |
| Innenradius | R102 |
| Höhe | H101 |
| Lotschicht | 140 |
| Kehlnaht | 141 |
| Wandstärke Wellendach 131 | S101 |
| Wandstärke Wellensteg 132 | S2 |
| Transversale Wandstärke bei Blechkante 134 | S3 |
| projizierter Querschnitt | Q |
| Lotschichtdicke | d |

## Patentansprüche

1. Verfahren zur Herstellung einer Lamelle (103) für einen Plattenwärmetauscher, aufweisend folgende Schritte:
(a) Bereitstellen einer wellenförmigen Struktur (3) aus einem umgeformten, insbesondere biegeumgeformten Blech, mit zumindest einem Wellendach (31) mit Wellenstegen (32), wobei das Wellendach (31) und die Wellenstege (32) jeweils über eine Blechkante (34) verbunden sind, und wobei die Blechkante (34) einen Innenradius (R2) und einen Außenradius (R1) aufweist,
**gekennzeichnet durch**
(b) Druckumformen, vorzugsweise kaltes Fließpressen, des zumindest einen Wellendachs (31) mit Wellenstegen (32) der wellenförmigen Struktur (3) aus Schritt (a) derart, dass der Außenradius (R1) der Blechkanten (34) zwischen Wellendach (31) und jeweiligem Wellensteg (32) reduziert (R101) wird.

2. Verfahren nach Anspruch 1, **dadurch gekennzeichnet, dass** der Außenradius (R1) der Blechkanten (34) in Schritt (b) zu einem Außenradius (R101) in einem Bereich von 0,05mm bis 1,5mm, insbesondere von 0,05 bis 0,18 mm reduziert wird.

3. Verfahren nach Anspruch 1 oder 2, **dadurch gekennzeichnet, dass** beim Druckumformen die wellenförmige Struktur (3) in ihrer Höhe (H) reduziert wird, insbesondere um 0,4mm bis 1,2mm.

4. Verfahren nach einem der vorangehenden Ansprüche, **dadurch gekennzeichnet, dass** das mindestens eine Wellendach (31) und die Wellenstege (32) beim Druckumformen in eine rechtwinklige Anordnung zueinander gebracht werden.

5. Verfahren nach einem der vorangehenden Ansprüche, **dadurch gekennzeichnet, dass** ein Blech (20) zur wellenförmigen Struktur (3) mit mindestens einem Wellendach (31), insbesondere eins, zwei oder drei Wellendächern, umgeformt wird, insbesondere durch Biegeumformen, und nachfolgend das mindestens eine Wellendach (31) mit angrenzenden Wellenstegen (32) gemäß Schritt (b) druckumgeformt wird.

6. Verfahren nach einem der vorangehenden Ansprüche, **dadurch gekennzeichnet, dass** beim Druckumformen gemäß Schritt b) eine Flächenpressung, insbesondere durch einen ebenflächigen Stempel (50), von außen auf das mindestens eine Wellendach (31) aufgebracht wird, insbesondere während die an das Wellendach (31) angrenzenden Wellenstege (32), insbesondere durch eine Matrize, seitlich fixiert sind.

7. Verfahren nach einem der Ansprüche 5 oder 6, **dadurch gekennzeichnet, dass** ein erstes Wellendach (31) mit angrenzenden Wellenstegen (32) durch Umformen, insbesondere Biegeumformen, des Blechs (20) gebildet wird und nachfolgend das erste Wellendach (31) mit Wellenstegen (32) druckumgeformt wird, bevor ein zweites Wellendach (31) mit Wellenstegen (32) gebildet wird.

8. Verfahren zur Herstellung eines Plattenwärmetauschers, bei welchem eine Mehrzahl von Trennblechen (4) und Lamellen (3, 103) in einem Stapel abwechselnd übereinander angeordnet werden und in einem Lötofen miteinander verlötet werden, um einen quaderförmigen Wärmetauscherblock zu bilden, **dadurch gekennzeichnet, dass** zumindest eine (103) der Lamellen (3, 103) gemäß einem Verfahren nach einem der vorangehenden Ansprüche gefertigt ist.

## Claims

1. Method for producing a lamella (103) for a plate heat exchanger, said method comprising the following steps:
a) providing a corrugated structure (3) from a formed metal sheet, in particular a bend-formed metal sheet, having at least one wave crest (31) having wave flanks (32), wherein the wave crest (31) and the wave flanks (32) are in each case connected by way of a metal-sheet edge (34), and wherein the metal-sheet edge (34) has an internal radius (R2) and an external radius (R1), **characterized by**
b) compression-forming, preferably cold-extruding, the at least one wave crest (31) having wave flanks (32) of the corrugated structure (3) from step a) in such a manner that the external radius (R1) of the metal-sheet edges (34) between the wave crest (31) and the respective wave flank (32) is reduced (R101).

2. Method according to Claim 1, **characterized in that** the external radius (R1) of the metal-sheet edges (34) in step b) is reduced to an external radius (R101) in a range from 0.05 mm to 1.5 mm, in particular from 0.05 mm to 0.18 mm.

3. Method according to Claim 1 or 2, **characterized in that** the corrugated structure (3), when compression-forming, in terms of the height (H) of said corrugated structure (3) is reduced in particular by 0.4 mm to 1.2 mm.

4. Method according to one of the preceding claims, **characterized in that** the at least one wave crest (31) and the wave flanks (32), when compression-forming, are brought to a mutually orthogonal arrangement.

5. Method according to one of the preceding claims, **characterized in that** a metal sheet (20) is formed to the corrugated structure (3) having at least one wave crest (31), in particular one, two, or three wave crests, in particular by bend-forming, and subsequently the at least one wave crest (31) having adjacent wave flanks (32) is compression-formed according to step b).

6. Method according to one of the preceding claims, **characterized in that**, when compression-forming according to step b), a surface pressure is applied externally, in particular by way of a planar ram (50), to the at least one wave crest (31), in particular while the wave flanks (32) adjacent to the wave crest (31) are laterally fixed, in particular by a die.

7. Method according to one of Claims 5 or 6, **characterized in that** a first wave crest (31) having adjacent wave flanks (32) is formed by forming, in particular bend-forming, of the metal sheet (20), and subsequently the first wave crest (31) having wave flanks (32) is compression-formed before a second wave crest (31) having wave flanks (32) is formed.

8. Method for producing a plate heat exchanger, in which method a plurality of separation plates (4) and lamellas (3, 103) are disposed in an alternating manner on top of one another in a stack and in a soldering oven are soldered to one another so as to form a cuboid heat exchanger block, **characterized in that** at least one (103) of the lamellas (3, 103) is made by a method according to one of the preceding claims.

## Revendications

1. Procédé de fabrication d'une lamelle (103) pour un échangeur de chaleur à plaque, avec les étapes suivantes:
(a) la préparation d'une structure de forme ondulée (3) à partir d'une tôle déformée, en particulier déformée par flexion, avec au moins un toit d'onde (31) avec des flancs d'onde (32), dans lequel le toit d'onde (31) et les flancs d'onde (32) sont respectivement reliés par une arête de tôle (34), et dans lequel l'arête de tôle (34) présente un rayon intérieur (R2) et un rayon extérieur (R1),
**caractérisé par**
(b) la déformation sous pression, de préférence le filage à la presse à froid, dudit au moins un toit d'onde (31) avec des flancs d'onde (32) de la structure de forme ondulée (3) de l'étape (a), de telle manière que le rayon extérieur (R1) des arêtes de tôle (34) entre le toit d'onde (31) et le flanc d'onde respectif (32) soit réduit (R101).

2. Procédé selon la revendication 1, **caractérisé en ce que** le rayon extérieur (R1) des arêtes de tôle (34) est réduit à l'étape (b) à un rayon extérieur (R101) situé dans une plage de 0,05 mm à 1,5 mm, en particulier de 0,05 à 0,18 mm.

3. Procédé selon la revendication 1 ou 2, **caractérisé en ce que** la hauteur (H) de la structure de forme ondulée (3) est réduite, en particulier de 0,4 mm à 1,2 mm, lors de la déformation sous pression.

4. Procédé selon l'une quelconque des revendications précédentes, **caractérisé en ce que** l'au moins un toit d'onde (31) et les flancs d'onde (32) sont placés en un agencement perpendiculaire entre eux lors de la déformation sous pression.

5. Procédé selon l'une quelconque des revendications précédentes, **caractérisé en ce qu'**une tôle (20) est déformée en la structure de forme ondulée (3) avec au moins un toit d'onde (31), en particulier un, deux ou trois toits d'onde, en particulier par déformation par flexion, et ledit au moins un toit d'onde (31) avec des flancs d'onde adjacents (32) est ensuite déformé sous pression selon l'étape (b).

6. Procédé selon l'une quelconque des revendications précédentes, **caractérisé en ce que** lors de la déformation sous pression selon l'étape (b) une pression de surface est appliquée, en particulier par un poinçon à surface plane (50), de l'extérieur audit au moins un toit d'onde (31), en particulier pendant que les flancs d'onde (32) adjacents au toit d'onde (31) sont fixés latéralement, en particulier par une matrice.

7. Procédé selon une des revendications 5 ou 6, **caractérisé en ce qu'**un premier toit d'onde (31) avec des flancs d'onde adjacents (32) est formé par déformation, en particulier par déformation par flexion, de la tôle (20), et le premier toit d'onde (31) avec des flancs d'onde (32) est ensuite déformé sous pression, avant qu'un deuxième toit d'onde (31) avec des flancs d'onde (32) soit formé.

8. Procédé de fabrication d'un échangeur de chaleur à plaque, dans lequel une multiplicité de tôles de séparation (4) et de lamelles (3, 103) sont disposées l'une au-dessus de l'autre en alternance en une pile et sont brasées les unes aux autres dans un four de brasage, afin de former un bloc d'échangeur de chaleur parallélépipédique, **caractérisé en ce qu'**au moins une (103) des lamelles (3, 103) est fabriquée par un procédé selon l'une quelconque des revendications précédentes.
